Europäisches Patentamt

European Patent Office

Office européen des brevets

(11) Numéro de publication: **0 419 359 A1**

# DEMANDE DE BREVET EUROPEEN

(21) Numéro de dépôt: 90402600.2

(22) Date de dépôt: 20.09.90

(51) Int. Cl.5 **A23L 1/308**

(30) Priorité: 20.09.89 FR 8912331

(43) Date de publication de la demande:
27.03.91 Bulletin 91/13

(84) Etats contractants désignés:
**BE CH DE DK GB IT LI NL SE**

(71) Demandeur: **SOFALIA**
**Immeuble Bellini, 1, Place Bellini**
**F-92800 Puteaux(FR)**

(72) Inventeur: **Marie, Gérard**
**62, Avenue du Général Leclerc**
**F-95390 Saint Prix(FR)**
Inventeur: **Motte, Emanuelle**
**6, rue des Carrières Saint Julien**
**F-14000 Caen(FR)**

(74) Mandataire: **Fritel, Hubert et al**
**111, route de Noisy B.P. no 9**
**F-93230 Romainville(FR)**

(54) **Produit végétal riche en fibres alimentaires, son procédé de préparation et son utilisation en formulations alimentaires.**

(57) Procédé de préparation d'un produit végétal riche en fibres alimentaires à viscosité élevée, caractérisé en ce que l'on soumet un matériau ayant une teneur en fibres alimentaires d'au moins 50 % en poids et ayant une taille de particules de 40 à 315 microns à un traitement de dilacération effectué de préférence en suspension aqueuse.

EP 0 419 359 A1

# PRODUIT VÉGÉTAL RICHE EN FIBRES ALIMENTAIRES, SON PROCÉDÉ DE PRÉPARATION ET SON UTILISATION EN FORMULATIONS ALIMENTAIRES.

L'invention concerne un produit végétal riche en fibres alimentaires à viscosité élevée, son procédé de préparation et son utilisation en formulations alimentaires.

L'expression "fibre alimentaire" employée pour la première fois par Trowell en 1972 (Trowell, H.C. Ischemic heart disease and dietary fiber Am. J. Clin Nutr. 1972 25 : 926) pour décrire les constituants de la paroi cellulaire des végétaux résistant aux sécrétions enzymatiques du tube digestif de l'homme, recouvrait essentiellement les constituants polysaccharidiques de la paroi (cellulose, hémicellulose et pectines). En 1974 cette définition a été étendue aux composants non polysaccharidiques de la paroi : lignine, protéines de structure, minéraux ainsi qu'aux constituants de certains tissus spécialisés (Trowell H.C. Definitions of fiber Lancet 1974 1 503).

L'évolution des modes de vie du monde occidental dans les dernières décennies a contribué à modifier en profondeur la demande alimentaire. L'ensemble des pays industrialisés est passé globalement d'une demande d'aliments énergétiques permettant de mener une vie où la dépense physique était importante, à une demande d'aliments auxquels il est demandé d'abord d'être équilibrés du point de vue nutritionnel l'apport énergétique devenant moins important.

Après le suivi des apports en l'un ou l'autre des nutriments principaux (glucides, protides, lipides, oligoéléments, vitamines) en quantités est venue l'étude de leur apport en qualité (acides aminés essentiels, acides gras polyinsaturés, etc...).

Ce n'est que dans les deux dernières décennies que l'on a commencé à se poser sérieusement le problème de la place des fibres alimentaires dans la ration humaine. Et ce n'est que depuis quelques années seulement que l'on s'est aperçu du rôle important qu'elles jouent dans l'ensemble de la régulation de la fonction digestive, ainsi que dans la prévention d'un certain nombre de troubles liés à l'appareil digestif lui-même.

Les nutritionnistes se sont alors rendu compte que, du fait de l'évolution qualitative et quantitative de la ration alimentaire, une grande partie des habitants des pays occidentaux était en état de subcarence vis à vis de leurs besoins en fibres alimentaires, et donc, qu'il devenait nécessaire de supplémenter, d'une façon ou d'une autre, la ration journalière en ce qui lui manque comme apport de fibres alimentaires.

Les fibres alimentaires présentes dans les végétaux sont en général et en majorité, composées de cellulose et de lignine, composés fortement structurés et insolubles. Elles sont donc quasi totalement dépourvues de propriétés fonctionnelles et leur emploi dans certaines formulations alimentaires courantes est difficile, ou impossible pour des raisons de qualité organoleptiques du produit fini, ou de fonctionnalité dans le cadre de la réalisation du produit, ou les deux à la fois.

Ainsi le matériel végétal brut provenant de diverses fabrications de produits alimentaires, dont il constitue le co-produit et qui existe en grandes quantités, renferme des fibres alimentaires pour lesquelles les procédés de traitements existants ne permettent pas d'obtenir des produits ayant des propriétés organoleptiques et fonctionnelles satisfaisantes. D'une façon générale, ces produits ne sont pas agréables au palais et nécessitent l'addition d'un agent de texture pour la préparation de formulations alimentaires diverses.

L'invention concernée par la présente demande réside dans la mise en oeuvre de techniques physiques qui permettent l'obtention de produits végétaux riches en fibres alimentaires agréables au palais et doués de propriétés fonctionnelles en ce qui concerne la texture de l'aliment dans lequel ils sont incorporés.

Un aspect de l'invention concerne un procédé de préparation d'un produit végétal riche en fibres alimentaires à viscosité élevée, caractérisé en ce que l'on soumet un maté riau ayant une teneur en fibres alimentaires d'au moins 50 % en poids et ayant une taille de particules de 40 à 315 microns à un traitement de dilacération effectué de préférence en suspension aqueuse.

Le matériau utilisé comme produit de départ dans le procédé de l'invention est un matériel végétal brut tel que par exemple des fibres de pois, de tomates, de pommes, d'agrumes, de betteraves, de cacao ou de céréales ayant subi un traitement préliminaire qui le rend compatible avec un usage alimentaire, l'enrichit en fibres alimentaires et lui donne un aspect physique convenable en ce qui concerne la granulométrie.

D'une façon générale, le matériau renferme une teneur en fibres alimentaires d'au moins 50 % en poids, de préférence comprise entre 65 et 85 % et déterminée selon la méthode d'analyse de fibres alimentaires dite "AOAC" décrite par Prosky et al. J. Assoc. Off. Anal. Chem. 68(4) 677-679 (1985).

La taille des particules obtenue d'une façon générale par différents moyens de broyage connus tel que le broyeur à marteau ou à cylindre entre quelques microns et quelques mm est comprise entre 40 et 315 microns. Selon l'origine du matériel végétal, 35 à 65 % des particules ont une taille comprise entre 40 et 100 microns. Par traitement de dilacération, on entend que le matériau de départ est soumis à un traitement physique capable d'effectuer des cisaillements de la structure cristalline originelle des fibres, sans modifier sensiblement la taille des particules, ni la teneur en fibres. La dilacération peut être effectuée à l'aide d'un homogénéisateur ou d'un broyeur colloïdal. Le procédé revendiqué permet ainsi de préparer un produit ayant une teneur riche en fibres alimentaires essentiellement identique à celle du matériau de départ et dont la viscosité a été augmentée par le traitement de dilacération.

L'invention concerne particulièrement un procédé caractérisé en ce que le traitement de dilacération est réalisé en suspension aqueuse à une concentration comprise entre 1 et 30 %, de préférence entre 3 et 15 % et à une température comprise entre 20 et 100° C, de préférence entre 40 et 60° C,
- soit par homogénéisation sous pression d'au moins 50 Kg/cm², de préférence 150 à 450 Kg/cm²,
- soit à l'aide d'un broyeur colloïdal à serrage négatif.

La suspension aqueuse est réalisée de préférence dans de l'eau, éventuellement de l'eau déminéralisée. La concentration peut varier de 1 à 30 % selon le matériau de départ et selon le moyen de dilacération utilisé. De préférence la concentration est comprise entre 3 et 15 %. Dans le cas de l'homogénéisation, celle-ci est réalisée à l'aide d'un appareil comprenant une pompe fonctionnant sous pression élevée, tel qu'un homogénéisateur Manton Gaulin et dont la pression peut varier selon le matériel de départ et la viscosité souhaitée. La pression est de préférence comprise entre 150 et 450 Kg/cm². Dans le cas du broyeur colloïdal, l'appareil est utilisé dans des conditions connues avec un serrage négatif, par exemple comme dans la fabrication des caséinates.

L'invention concerne tout particulièrement un procédé caractérisé en ce que l'on effectue plusieurs cycles de dilacération de manière à obtenir une viscosité d'au moins 600 cp.

Le nombre de cycles auquel on soumet la suspension peut varier de 1 à 10, de préférence de 2 à 4, selon le matériau de départ et selon le moyen de dilacération. La viscosité de la suspension est mesurée après chaque cycle avec un appareil Rhéomat 108 et exprimée en centipoise, noté cp. Selon la concentration et le moyen de dilacération, on opère de façon à obtenir une viscosité d'au moins 600 cp, de préférence comprise entre 600 et 5000 cp.

La suspension visqueuse obtenue selon le procédé de l'invention est ensuite déshydratée selon une méthode connue telle que par procédé spray dans une tour de séchage équipée d'une turbine ou de buses, dans le cas ou l'on désire un produit sous forme de poudre ou sur un tambour, en présence d'adjuvants de séchage, dans le cas ou l'on désire un produit sous forme de paillettes.

Un autre aspect de l'invention concerne un produit végétal riche en fibres alimentaires à viscosité élevée, de préférence supérieure à 600 cp, tel qu'obtenu selon le procédé décrit.

Le produit préféré de l'invention a une teneur en fibres alimentaires de 65 à 85 % en poids, selon le matériau de départ et une viscosité comprise entre 600 et 4000 cp, selon le matériau de départ et les conditions utilisées du procédé, mesurée sur une dispersion à 10 % en poids dans l'eau à l'aide du Rhéomat 108.

L'invention a également pour objet l'utilisation des produits décrits ci-dessus, pour la préparation de formulations alimentaires telles que les potages, les crèmes-dessert, les desserts.

L'utilisation des produits consiste à incorporer le produit dans une préparation alimentaire humide par agitation vive pendant quelques minutes par un moyen mécanique, par exemple à l'aide d'une turbine, de façon à augmenter la teneur en fibres alimentaires et donner une texture épaisse et onctueuse sans ajout d'agent de texture habituellement nécessaire à des formulations alimentaires telles que des potages, des desserts ou des crèmes-dessert.

L'invention concerne également les formulations alimentaires contenant des fibres alimentaires à viscosité élevée, décrites ci-dessus.

Dans les formulations alimentaires le produit de l'invention remplace une quantité analogue d'agent de texture habituellement utilisé tel que par exemple l'amidon modifié, le carraghénate ou un mélange des deux. Les formulations alimentaires peuvent être humides prêtes à la consommation ou avoir été intermédiairement déshydratées. Les préparations humides telles que les potages ou les crèmes-dessert et les préparations déshydratées telles que les potages instantanés ou les desserts prêts à l'emploi, après réhydratation ont une viscosité identique aux formulations correspondantes renfermant un agent de texture, une consistance comparable et un goût agréable au palais.

Les exemples suivant illustrent l'invention sans la limiter.

**EXEMPLE 1** : traitement de fibres de pois par homogénéisation.

EP 0 419 359 A1

On traite 1000 g de fibres de pois contenant 80 % de fibres alimentaires et ayant une taille de particules comprise entre 40 et 200 microns (environ 50 % des particules compris entre 50 et 100 microns) que l'on disperse dans de l'eau à la concentration de 10 % en poids et à une température de 40° C.

Le mélange est homogénéisé par passage dans un homogénéisateur Manton Gaulin sous une pression de 230 Kg/cm$^2$ en effectuant le cycle 4 fois. La mesure de la viscosité de la suspension après chaque cycle donne les résultats suivants:

viscosité initiale : 50 cp
viscosité après le 1er cycle : 1100 cp
viscosité après le 2ème cycle : 1500 cp
viscosité après le 3ème cycle : 2200 cp
viscosité après le 4ème cycle : 3200 cp
(mesure avec Rhéomat 108 pour une vitesse de cisaillement de 50 tours/mn avec le cylindre n° 1).

**EXEMPLE 2** : traitement de fibres de cacao par homogénéisation.

On traite 1000 g de fibres de cacao contenant 70 % de fibres alimentaires et ayant une taille de particules comprise entre 40 et 200 microns (environ 50 % des particules compris entre 40 et 80 microns) que l'on disperse puis homogénéise comme dans l'exemple 1 à la concentration de 7 % en poids et sous une pression de 200 kg/cm$^2$ en effectuant 2 cycles. On obtient les résultats suivants :

viscosité initiale : 30 cp
viscosité après le 1er cycle : 350 cp
viscosité après le 2ème cycle : 600 cp
(Rhéomat 108 à 50 tours/mn et cylindre n° 1).

**EXEMPLE 3** : traitement de fibres de betteraves par homogénéisation.

On traite 1000 g de fibres de betteraves contenant 80 % de fibres alimentaires et ayant une taille de particules comprise entre 40 et 200 microns (environ 50 % des particules compris entre 50 et 100 microns) que l'on disperse puis homogénéise comme dans l'exemple 2. On obtient les résultats suivants :

viscosité initiale : 30 cp
viscosité après le 1er cycle : 2900 cp
viscosité après le 2ème cycle : 3400 cp
(Rhéomat 108 à 50 tours/mn et cylindre n° 2).

**EXEMPLE 4** : traitement de fibres de cacao par broyeur colloïdal.

On trait 1000 g de cacao contenant 70 % de fibres alimentaires et ayant une taille de particules comprise entre 40 et 200 microns (environ 50 % des particules compris entre 40 et 80 microns) que l'on disperse dans de l'eau déminéralisée à la concentration de 3 % en poids et à une température de 40° C puis soumet à un cycle de broyade dans un broyeur MK 95 de FRYMA sous un serrage négatif de 3,50. On obtient les résultats suivants :

viscosité initiale : 30 cp
viscosité après traitement : 600 cp

**EXEMPLE 5** : viscosités comparées de produits riches en fibres aprés homogénéisation.

On traite de façon identique des fibres d'origine variée contenant 50 à 80 % de fibres alimentaires et ayant une taille de particules comprise entre 40 et 315 microns (environ 50 % des particules compris entre 40 et 100 microns) que l'on disperse à la concentration de 10 % en poids et homogénéise dans un Manton Gaulin. Le résultats sont les suivants :

4

| Nature des fibres | Viscosité initiale | Viscosité de la dispersion de fibres après 2 cycles d'homogénéisation à 200 bars | Viscosité de la dispersion obtenue par mélange des fibres homogénéisées et séchées dans de l'eau |
|---|---|---|---|
| Fibres de pois | 50 cp | 1100 cp | 1000 cp |
| Fibres de cacao | 10 cp | 600 cp | 600 cp |
| Fibres de betteraves | 30 cp | 3400 cp | 3500 cp |
| Fibres d'agrumes | 40 cp | 600 cp | 550 cp |
| Fibres de tomates | non mesurable car trop faible | 700 cp | 600 cp |
| (mesure avec Rhéomat 108 comme décrit ci-dessus, avec reconstitution de la suspension aqueuse à la concentration initiale dans le cas des fibres séchées aprés homogénéisation). | | | |

EP 0 419 359 A1

| EXEMPLE 6: formulations alimentaires humides. | | |
| --- | --- | --- |
| Potage au poulet : | | |
| **INGREDIENTS** (pour 1000 g) | **TEMOIN** | **ESSAI** |
| Amidon modifié | 45 | - |
| Flocon de pomme de terre | 4 | 4 |
| Lactose | 10 | - |
| Sel | 13 | - |
| Glutamate | 6 | 13 |
| Viande de poulet | 9 | 9 |
| Aromates | 1 | 1 |
| Arome viande | 3 | 3 |
| Lait écrémé en poudre | 17 | 17 |
| Fibres de pois préparées suivant l'exemple 1 | - | 45 |
| Matière grasse en poudre | 8 | 8 |
| Eau | 884 | 900 |
| | $\overline{1000}$ | $\overline{1000}$ |
| Viscosité du produit final | 60 cp | 62 cp |
| (Rhéomat 108 - 50 tours/mn - cylindre n° 2) | | |
| Crème dessert vanille : | | |
| **INGREDIENTS** (%) | **TEMOIN** | **ESSAI** |
| Lait écrémé | 84,89 | 82,99 |
| Sucre cristallisé | 10,00 | 10,00 |
| Amidon modifié | 3,50 | - |
| Carraghenate | 0,10 | - |
| Fibres de betteraves préparées suivant l'exemple 3 | - | 5,50 |
| Arome vanille | 1,50 | 1,50 |
| Colorant jaune | 0,01 | 0,01 |
| | $\overline{100}$ | $\overline{100}$ |
| Viscosité du produit final | 350 cp | 360 cp |
| (Rhéomat 108 - 50 tours/mn - cylindre n° 2) | | |

| EXEMPLE 7: formulations alimentaires déshydratées. | | |
|---|---|---|
| Potage à la tomate instantané : | | |
| INGREDIENTS (pour 1000 g) | TEMOIN | ESSAI |
| Amidon modifié | 275 | - |
| Tomate en poudre | 300 | 300 |
| Maltodextrine | 65 | 70 |
| Sel | 80 | 80 |
| Fibres de tomates préparées suivant l'exemple 5 | - | 270 |
| Sucre | 70 | 70 |
| Matière grasse en poudre | 65 | 65 |
| Arome tomate | 45 | 45 |
| Lait écrémé en poudre | 38 | 38 |
| Glutamate | 30 | 30 |
| Arome aromates | 25 | 25 |
| Betterave en poudre | 6 | 6 |
| Acide citrique | 1 | 1 |
| | 1000 | 1000 |
| Réhydrater 16 g de la préparation dans 200 ml d'eau bouillante. | | |
| Viscosité du produit réhydraté | 59 cp | 63 cp |
| (Rhéomat 108 - 50 tours/mn - cylindre n° 2) | | |
| Préparation pour mousse au chocolat : | | |
| INGREDIENTS (%) | TEMOIN | ESSAI |
| Poudre de lait écrémé | 25 | 26 |
| Sucre glace | 50 | 60 |
| Amidon modifié | 10 | - |
| Carraghenate | 1 | - |
| Fibres de cacao préparées suivant l'exemple 4 | - | 10 |
| Cacao dégraissé | 14 | 4 |
| | 100 | 100 |
| Réhydrater 250 g de la préparation dans un litre d'eau fraîche et battre au mixeur jusqu'à la consistance désirée. | | |
| Viscosité du produit reconstitué | 1100 cp | 1150 cp |
| (Rhéomat 108 - 50 tours/mn - cylindre n° 2) | | |

**Revendications**

1) Procédé de préparation d'un produit végétal riche en fibres alimentaires à viscosité élevée, caractérisé en ce que l'on soumet un matériau ayant une teneur en fibres alimentaires d'au moins 50 % en poids et ayant une taille de particules de 40 à 315 microns à un traitement de dilacération effectué de préférence en suspension aqueuse.

2) Procédé selon la revendication 1, caractérisé en ce que le traitement de dilacération est réalisé en suspension aqueuse à une concentration comprise entre 1 et 30 %, de préférence entre 3 et 15 % et à une température comprise entre 20 et 100 $^\circ$C, de préférence entre 40 et 60 $^\circ$C

- soit par homogénéisation sous pression d'au moins 50 Kg/cm$^2$, de préférence 150 à 450 Kg/cm$^2$
- soit à l'aide d'un broyeur colloïdal à serrage négatif.

3) Procédé selon la revendication 2, caractérisé en ce que l'on effectue plusieurs cycles de dilacération de manière à obtenir une viscosité d'au moins 600 cp.

4) Produit végétal riche en fibres alimentaires à viscosité élevée, de préférence supérieure à 600 cp, tel qu'obtenu selon le procédé décrit à l'une quelconque des revendications 1 à 3.

5) Utilisation des produits selon la revendication 4, pour la préparation de formulations alimentaires telles que les potages, les crèmes-dessert, les desserts.

6) Formulations alimentaires contenant des fibres alimentaires à viscosité élevée, telles que définies à la revendication 4.

# RAPPORT DE RECHERCHE EUROPEENNE

Numéro de la demande

**EP 90 40 2600**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 544 593 (STABILIMENTI TORRE DI LIUGI TORRE)<br>* Revendications 1,4,5,6; page 6, lignes 25-29 *<br>– – – | 1-6 | A 23 L 1/308 |
| A | FR-A-2 595 038 (A. LAULY)<br>* Revendications 1,2,6,7-10 *<br>– – – | 1-6 | |
| A | US-A-4 770 886 (B.C. LEE)<br>* Revendications 1-21 *<br>– – – | 1-6 | |
| A | JOURNAL OF FOOD SCIENCE, vol. 47, no. 5, septembre-octobre 1982, pages 1472-1477, Chicago, Illinois, US; F.W. SOSULSKI et al.: "Composition and physiological properties of several sources of dietary fiber"<br>* Page 1472, "Introduction"; tableaux 2,3 *<br>– – – – – | 1 | |

**DOMAINES TECHNIQUES RECHERCHES (Int. Cl.5)**

A 23 L

Le présent rapport de recherche a été établi pour toutes les revendications

| Lieu de la recherche | Date d'achèvement de la recherche | Examinateur |
|---|---|---|
| La Haye | 12 décembre 90 | VAN MOER A.M.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant